# EUROPEAN PATENT SPECIFICATION

(11) **EP 1 860 647 B1**
(45) Date of publication and mention of the grant of the patent: **23.12.2009**
(21) Application number: 06010748.9
(22) Date of filing: 24.05.2006
(51) Int. Cl.: G10L 17/00, G06K 9/00

(54) **Robust speaker recognition**
Robuste Sprechererkennung
Reconnaissance robuste du locuteur

(43) Date of publication of application: 28.11.2007
(73) Proprietor: VOICE.TRUST AG, 81379 München (DE)
(72) Inventor: Pilz, Christian S., 81379 - München (DE)
(74) Representative: Meissner, Bolte & Partner

(56) References cited:
- EP-A- 1 006 509
- DUNN R B ET AL INSTITUTE OF ELECTRICAL AND ELECTRONICS ENGINEERS: "Speaker recognition from coded speech and the effects of score normalization" CONFERENCE RECORD OF THE 35TH. ASILOMAR CONFERENCE ON SIGNALS, SYSTEMS, & COMPUTERS. PACIFIC GROOVE, CA, NOV. 4 - 7, 2001, ASILOMAR CONFERENCE ON SIGNALS, SYSTEMS AND COMPUTERS, NEW YORK, NY : IEEE, US, vol. VOL. 1 OF 2. CONF. 35, 4 November 2001 (2001-11-04), pages 1562-1567, XP010582298 ISBN: 0-7803-7147-X
- CASTELLANO P J ET AL: "Effects of speech coding on speaker verification" ELECTRONICS LETTERS, IEE STEVENAGE, GB, vol. 32, no. 6, 14 March 1996 (1996-03-14), pages 517-518, XP006004869 ISSN: 0013-5194
- GARCIA A A ET AL: "CHANNEL-ROBUST SPEAKER IDENTIFICATION USING MODIFIED-MEAN CEPSTRAL MEAN NORMALIZATION WITH FREQUENCY WARPING" 1999 IEEE INTERNATIONAL CONFERENCE ON ACOUSTICS, SPEECH, AND SIGNAL PROCESSING. PHOENIX, AZ, MARCH 15 - 19, 1999, IEEE INTERNATIONAL CONFERENCE ON ACOUSTICS, SPEECH, AND SIGNAL PROCESSING (ICASSP), NEW YORK, NY : IEEE, US, vol. VOL. 1, 15 March 1999 (1999-03-15), pages 325-328, XP000900124 ISBN: 0-7803-5042-1

## Description

### TECHNICAL FIELD

The present disclosure generally relates to robust pattern recognition, and more particularly to robust speaker recognition in digital systems.

### BACKGROUND ART

Pattern recognition is the task of assigning an object or structure to one of several pre-specified categories. For example, a handwritten text may be analyzed and recognized by means of pattern recognition techniques, i.e., each element of the handwritten text is assigned to a certain character. As another example, different objects or structures contained in an image can be assigned to several predefined object classes. Furthermore, human speech can also be regarded as a sequence of input patterns which can be analyzed to automatically recognize the text contained in the human speech signal. Also, the human speech signal can be analyzed to determine the identity of the speaker who has provided the speech signal.

A pattern can be characterized by a set of feature values. Therefore, pattern recognition systems try to extract characteristic feature values from an input pattern or input pattern signal. These feature values can be comprised in a feature set or feature vector which has a dimension corresponding to the number of feature values, thereby defining a multidimensional feature space. Several pattern classes are defined within the multidimensional feature space. The pattern recognition system assigns the input pattern to said pattern class to which the feature vector of the input pattern matches best.

The different features may represent symbolic information such as color, brightness and shape, or numeric information such as length, weight and area. Furthermore, the feature values of a feature vector may represent coefficients which are able to characterize a pattern signal such as a speech signal.

For pattern recognition, a feature set or feature vector is extracted from an input pattern and compared to one or more stored reference feature sets or feature vectors which correspond to different pattern classes. Based on the comparison result(s), the input pattern is assigned to one of the different pattern classes. It is also possible to extract several feature vectors from an input pattern signal. For example, a sequence of acoustic feature vectors may be extracted from an input speech signal.

In today's systems, patterns are usually provided by physical signals in a digitized form to be suitable for digital data processing and/or digital data communication. For example, a pattern signal such as an analog speech signal may be digitized by a pulse code modulation (PCM) process, thereby obtaining a PCM signal which may be further processed by a digital data compression technique such as MPEG. In this manner, on the one hand, the power of digital processing techniques can be used when processing an digital input signal and on the other hand, the bandwidth required for transmitting a pattern signal can be reduced.

As usual digitizing techniques represent a form of information compression due to inherent quantizing, the digitizing techniques and the data compression techniques can be generally referred to as compression techniques. However, these usual compression techniques result in a loss of information which depends on the characteristics of the used compression technique.

Whereas this loss of information may be of no great concern in many applications, it may be very critical for applications which need high accuracy, as is the case in certain pattern recognition applications such as speaker authentication systems.

In such speaker authentication systems, the identity of a person is verified by the person's voice. Such a type of verification is becoming increasingly important as modern communication technologies and networks enable a user to access services which are highly sensitive to the user's identity, such as banking services, telephone services, home video provision services, auction services, broking services or medical services.

Usually, access to such services is secured by requesting a customer to provide a subscriber name and/or a personal identification number (PIN) prior to granting access to said service for said customer. However, the past has shown that securing the access to highly sensitive services only by requesting a subscriber name and/or a PIN prior to granting access to said service provides no sufficient protection against misuse, because any imposter gaining knowledge about a subscriber's name and PIN is able to deceive a service access security mechanism by requesting access to the service in the name of said subscriber and providing said subscriber's PIN, thereby obtaining access to the service in said subscriber's name.

Therefore, there is an increasing interest in improved security technologies, such as biometric-based technologies, in which a person's identify is verified by one or more of his/her biological characteristics, including fingerprints, eye retinas and irises, facial patterns and voice. For services based on digital communication, voice-based security technologies are particularly attractive, as the infrastructure and hardware to implement voice-based security technologies already exist in today's digital communication networks. Therefore, voice-based security mechanisms such as speaker authentication technologies can be implemented cost-effectively, leading to a growing demand for such speaker authentication technology solutions.

Such voice-based security technologies place high demands on the accuracy and reliability of the underlying speaker recognition process. However, the above-described compression-caused loss of information makes it difficult to correctly decide a pattern/speaker recognition request, particularly when different techniques may be used for digitizing/compressing an speech signal.

More generally, it is problematic for pattern recognition techniques when a specific pattern may be compressed in different pattern recognition sessions in different ways, as the compression-induced loss of information may be different for different compression techniques. This problem becomes particularly critical in situations in which characterizing features of a certain pattern have been extracted and stored from a first pattern signal which has been compressed according to a first compression technique, and in which later on it has to be decided whether a pattern of a second pattern signal which has been compressed according to a second compression technique corresponds to the pattern of the first pattern signal, see for example "Speaker Recognition from Coded Speech and the Effects of Score Normalization from Dunn.

### INVENTION

It is the object of the present invention to improve the robustness of automatic pattern recognition techniques against mismatch effects caused by the use of different compression techniques for digitizing/compressing a source pattern signal.

This object is solved by the present invention as defined by the independent claims.

Preferred embodiments are defined by the dependent claims.

The techniques described herein compensate for effects which arise from the usage of different compression techniques. A database is provided which stores a mean error signal for each of different compression techniques which may have been applied to a source signal. When an input signal stemming from a certain source signal and coded according to a certain compression technique is received, said certain compression technique is identified and an input pattern signal is determined from the received coded input signal. Then, the stored mean error signal of the recognized compression technique is added to the determined input pattern signal, thereby obtaining an enhanced input pattern signal.

The compression techniques may be digitizing techniques such as PCM based techniques, digital data compression techniques such as MPEG based techniques, or a combination of these techniques.

The mean error signals may be stored in the database in a format which allows them to be added to the determined input pattern signal. In an exemplary embodiment, the format of the determined input signal is predetermined, and the mean error signals are stored in an according format. In another exemplary embodiment, the determined input signal may assume one of a plurality of possible formats, and there are stored a plurality of corresponding mean error signals in according formats.

For example, the received coded input signal may be a PCM coded signal, and the input pattern signal may be determined by extracting feature values from the received coded input signal. Then, the determined input pattern signal may represent a feature vector or a sequence of feature vectors, and the mean error signal may be stored as a mean feature error vector.

In another exemplary embodiment, the received coded input signal is not only coded according to a digitizing technique, but also according to a digital data compression technique. The input pattern signal may be determined by decoding the received coded input signal according to the identified data compression technique, which results in a determined input signal in a digitized format, for example a quantized image format such as RGB or YUV. The mean error signal for the corresponding compression technique is stored in accordance with the RGB or YUV format and represents color deviations introduced by the identified compression technique.

In a further exemplary embodiment, the received coded input signal represents a feature vector or a sequence of feature vectors which have already been extracted from the source signal before transmission and which have been coded according to a data compression technique. The input pattern signal is determined by decoding the received coded input signal according to the identified data compression technique, thereby obtaining a pattern feature vector or a sequence of pattern feature vectors to which the mean error signal, which has been stored as a mean pattern feature error vector, can be added.

In further exemplary embodiments, one reference mean error signal may be stored in the database, and other mean error signals may be stored as relative mean error signals representing error signals relative to the reference mean error signal.

In further exemplary embodiments, the enhanced input pattern signal may be compared to each of a plurality of patterns signals stored in a pattern database, wherein each pattern signal represents a certain pattern, and a match value for each comparison may be determined indicating the similarity between the enhanced input pattern signal and the respective stored pattern signal. The enhanced input pattern signal may be determined to belong to a pattern class represented by that stored pattern signal which yielded the best match value. In further exemplary embodiments, the best match value has additionally to satisfy a certain assignment threshold value to be determined as being suitable for acceptable pattern class determination.

In other exemplary embodiments, the enhanced input pattern signal may be compared to only one pattern signal stored in a pattern database, and a match value for this comparison may be determined. Based on the determined match value, it may be decided whether or not the enhanced input pattern signal can be assigned to a pattern class represented by the stored pattern signal.

In a further exemplary embodiment related to speaker verification, a subscriber database of a speaker verification service stores a plurality of subscriber voice feature vectors, wherein each voice feature vector is characteristic for a certain subscriber to the speaker verification service. The coded input signal represents a digitized speech signal derived from a spoken utterance provided by a customer. Together with the speech signal, an indication is received which indicates a certain subscriber the customer claims to be. The obtained enhanced input pattern signal represents an enhanced input voice feature vector which is compared with the stored voice feature vector of the indicated subscriber, and a match value between them is determined. The customer's identity may be verified as the indicated subscriber when the determined match value satisfies a certain verification threshold condition.

In a further exemplary embodiment related to speaker identification, a subscriber database of a speaker identification service stores a plurality of subscriber voice speaker vectors, wherein each voice feature vector is characteristic for a certain subscriber to the identification service. The coded input signal represents a digitized speech signal derived from a spoken utterance provided by a customer. Together with the speech signal, a request is received for identifying to which subscriber the customer corresponds. The obtained enhanced input pattern signal represents an enhanced input voice feature vector which is compared with the stored subscriber voice feature vectors, and a match value is determined for each comparison indicating a grade of similarity between the enhanced input voice feature vector and the respective stored subscriber voice feature vector. The customer is then identified as that subscriber to which the stored subscriber voice feature vector with the best match value belongs. This identification step may also include a satisfaction of a certain identification threshold value.

### BRIEF DESCRIPTION OF THE DRAWINGS

The accompanying drawings are incorporated into and form a part of the specification. The drawings are not to be construed as limiting the invention to only the illustrated and described examples of how the technology can be made and used. Further features and advantages will become apparent from the following and more particular description, as illustrated in the accompanying drawings.

FIG. 1A represents a block diagram illustrating an exemplary environment in which the techniques described herein may be used.

FIG. 1B represents a flow diagram illustrating an exemplary pattern recognition process.

FIG. 2 represents a flow diagram illustrating an exemplary robust pattern recognition method in accordance with an exemplary embodiment of the present invention.

FIG. 3A represents a flow diagram illustrating an exemplary voice feature vector enhancement process in accordance with an exemplary embodiment of the present invention.

FIG. 3B represents a flow diagram illustrating an exemplary speaker verification process in accordance with an exemplary embodiment.

FIG. 3C represents a flow diagram illustrating an exemplary speaker identification process in accordance with an exemplary embodiment.

### DETAILED DESCRIPTION OF THE INVENTION

The illustrative embodiments of the present invention will be described with reference to the figure drawings.

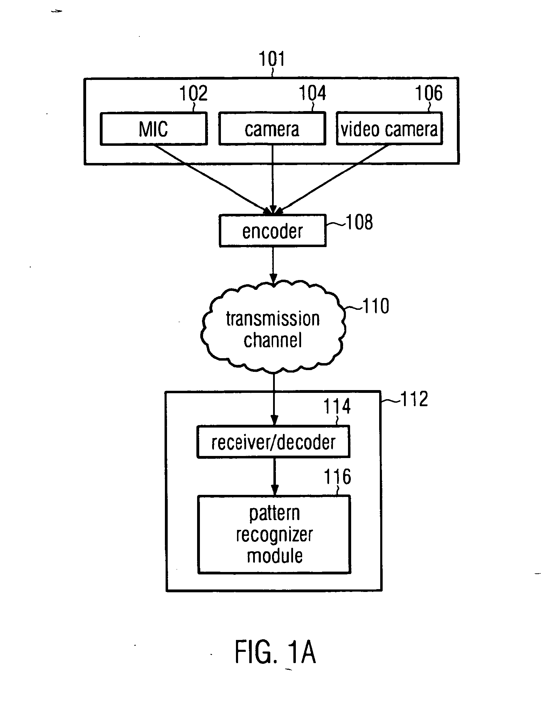

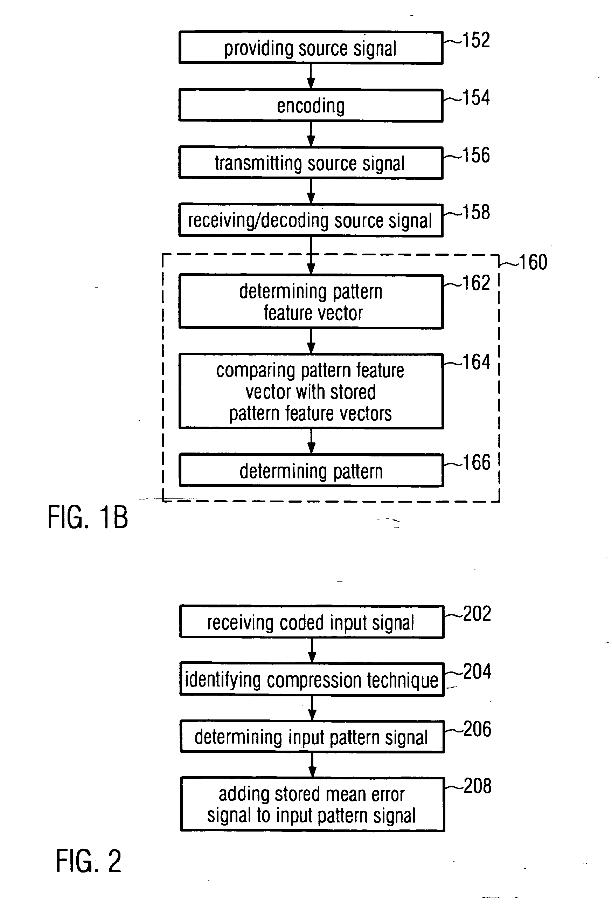

FIG. 1A illustrates the components involved in an exemplary robust pattern recognition application, and FIG 1B illustrates method steps corresponding to the exemplary robust pattern recognition application.

In step 152, a source signal is provided by an input device 101. The input device 101 may be one of a microphone 102, a camera 104 and a video camera 106. The microphone 102 may provide an analog electric speech signal resulting from a spoken acoustic utterance spoken by a speaker into the microphone 102. The camera 104 may provide an image signal representing a photo taken by a camera user, and video camera 106 may provide a video signal recorded by a video camera user. In step 154, the provided source signal, i.e., the electric speech signal, the image signal or the video signal, may be encoded by an encoder 108 according to a compression technique. The compression technique may be a mere quantization technique such as PCM based techniques to derive a digital signal from the provided source signal, or may be a digital compression technique which performs digital data compression on an already digital source signal, or may be a combination of a quantizing/digitizing technique and a digital data compression technique. The result of the encoding step 154 is a coded signal, which is transmitted over a transmission channel 110 in step 156. In step 158, the coded signal is received and possibly decoded by a receiver/decoder 114 of a pattern recognition server 112. Then, in pattern recognizer module 116, pattern recognition 160 is performed by determining one or more pattern feature vectors from the received and possibly decoded signal in step 162, comparing the determined pattern feature vector(s) with one or more stored pattern feature vectors in step 164, and determining in step 166 the pattern which corresponds to the received and possibly decoded signal.

FIG. 2 illustrates an exemplary robust pattern recognition method in accordance with an exemplary embodiment of the present invention.

In step 202, an input signal is received which is coded according to a compression technique. The compression technique may be a quantizing/digitizing technique such as PCM techniques or a digital data compression technique, or a sequence of a quantizing/digitizing technique followed by a digital data compression technique.

In step 204, the compression technique is identified. In step 206, an input pattern signal is determined from the received coded input signal. If only a digitizing technique, such as a PCM technique has been identified in step 204, the input pattern signal may be determined by extracting pattern features from the received input signal. If a data compression technique as well as a digitizing technique has been identified in step 204, the input pattern signal may be determined by decoding the coded input signal according to the identified digital data compression technique and by extracting pattern features from the resulting digitized input signal. If the received coded input signal represents a pattern feature vector which has already been extracted from the source signal before transmission and which has been decoded according to a digital data compression technique, the input pattern signal may be determined by decoding the received coded input signal according to the identified digital data compression technique, thereby resulting in an input pattern feature vector as the input pattern signal.

In step 208, a mean error signal corresponding to the identified compression technique is added to the determined input pattern signal, thereby obtaining an enhanced input pattern signal.

The mean error signal is provided by a database which stores a respective mean error signal for each of several compression techniques which may have been applied to the source signal. These respective mean error signals stored in the database may be in a format which allows them to be added to the input pattern signal.

The mean error signals may be obtained from test processes with defined test conditions. For example, a plurality of test pattern signals *TP₁, ..., TPₓ* may be encoded by one of a plurality of compression techniques *C₁, ..., C_{y}* and decompressed by one of a plurality of corresponding decompression techniques *D₁, ..., D_{z}.* In this manner, result pattern signals *TP_{ICmDn}* are obtained for each test pattern signal *TP_{I}* of test pattern signals *TP₁, ..., TPₓ* which has been compressed by compression technique *Cₘ* of compression techniques *C₁,* ..., *C_{y}* and decompressed by decompression technique *Dₙ* of decompression techniques *D₁, ..., D_{z}.* From each of the test pattern signals and the result pattern signals, pattern feature vectors may be extracted, and the difference between the pattern feature vector of the test pattern signal and the pattern feature vector of the corresponding result pattern signal may be determined. Based on this difference, an error vector may be obtained. When a plurality of test pattern signals have been compressed by the compression technique *Cₘ* and decompressed by the decompression technique *Dₙ,* a plurality of error vectors *E_{1CmDn} ..., E_{kCmDn}* is obtained from which a mean error vector *E_{CmDn}* representing a mean error signal may be derived. In another example, a reference feature vector may be determined and all other feature vectors as well as the mean error vectors are determined relative to the reference feature vector.

Thus, the addition of a mean error signal to an input pattern signal compensates for mismatch between an encoding compression technique an decoding compression technique or between an encoding compression technique and a predetermined reference compression technique.

The above described mismatch compensating techniques are particularly relevant in communication environments in which different end terminals may use different compression techniques, e.g., standardized codecs such as audio and video codecs from the MPEG family or speech codecs from the G.7xx family (standardized by the International Telecommunication Union ITU).

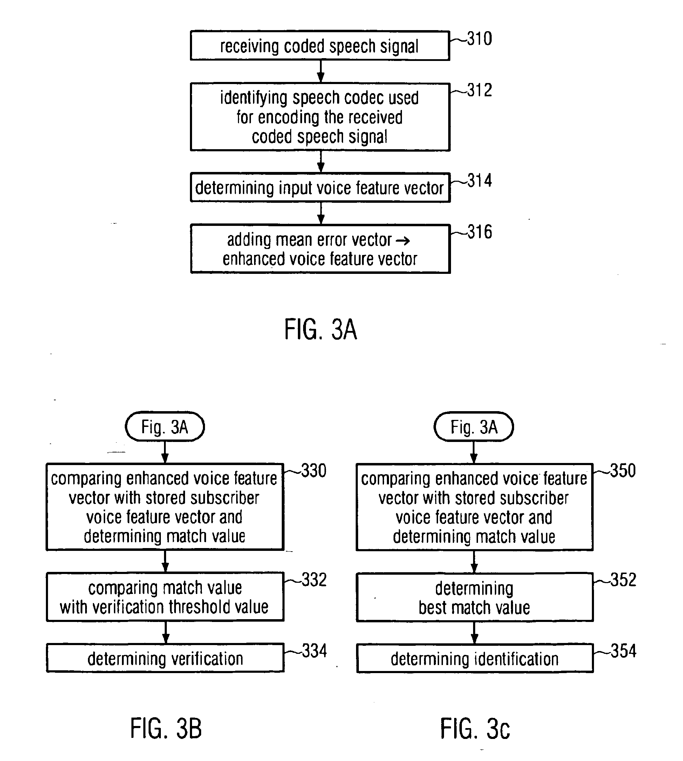

As an illustrating example, Figs. 3A, 3B and 3C show an exemplary application of the present invention to a speaker authentication process.

Speaker authentication technologies suffer particularly from the problem of different process conditions occurring during an enrollment process and an test process. In the enrollment process, a reference template or model is derived for a certain speaker based on characterizing features extracted from one or more speech samples provided by the speaker during a training session. In the test process, a speech sample of a speaker is analyzed and compared with reference templates or models of one or more enrolled speakers. As different speech encoders may be used during the enrollment and the test process, this encoder mismatch may result in a mismatch-induced difference between the extracted characterizing features and this mismatch-induced may lead to a worse authentication performance.

According the techniques described herein, in the exemplary application there is provided a database which comprises mean error vectors for each of a plurality of different speech codecs that may be used during test and/or enrollment. In a preferred embodiment, the mean error vectors are normalized to a reference mean error vector. Preferably, the reference mean error vector corresponds to a certain speech codec such as G.711, G.722, G.728 and AMR.

In an exemplary enrollment to an authentication server, the authentication server receives a coded speech signal resulting from a spoken utterance spoken by a prospective subscriber to the authentication server. The authentication server identifies the codec used for coding the speech signal, and extracts characteristic features from the speech signal. The characteristic features may be comprised in one or more characteristic feature vectors. Then, the characteristic feature vector(s) may be corrected with a mean error vector which represents a mismatch-induced difference resulting from a mismatch between the detected codec and the reference codec used in the database. The corrected characteristic feature vectors are assigned to the new subscriber and stored in a subscriber database. Alternatively, for the enrollment process it may be prescribed that the reference codec has to be used. In that case, the characteristic feature vectors may be extracted from the received speech signal and stored without correcting. With the subscriber database, the authentication server is prepared for a future authentication process.

Speaker authentication processes can be divided into speaker identification and speaker verification. Speaker identification is the process of determining to which one of N stored speaker references a provided voice sample can be assigned. Therefore, speaker identification can be regarded as a *1:N* decision.

In the case of speaker verification, it is determined whether or not an identity claimed by a speaker corresponds to the actual identity of the speaker. Typically, a speaker claims a certain subscriber identity by providing a subscriber identifier (for example, by speaking numbers, inputting passwords, or inserting a chip card with the identifier stored thereon), and then it is determined, by analyzing a speech sample provided by the speaker, whether or not his speech characteristics match up with stored speech reference characteristics of the claimed user. Therefore, the verification task can be regarded as a *1:1* decision.

Furthermore, speaker authentication systems can be distinguished in text dependent systems and text independent systems. Text dependent systems prompt a speaker to repeat a predetermined text sample after claiming a subscriber's identity. Text independent systems do not have any text related constraints and allow free text to be used by the speaker.

Figures 3A and 3B illustrate an exemplary speaker verification process in accordance with an exemplary embodiment, wherein Figure 3A relates to voice feature vector enhancement and Figure 3B relates to the actual speaker verification.

In step 310, the authentication server receives a coded speech signal together with an indication of which subscriber to the authentication server allegedly provides the speech signal. In step 312, the speech codec used for encoding the received speech signal is identified. In step 314, an input voice feature vector is determined from the received speech signal. In step 316, a mean error vector corresponding to the identified speech codec is added to the determined input voice feature vector, thereby obtaining an enhanced voice feature vector.

In step 330, the enhanced voice feature vector is compared with that voice feature vector stored in the subscriber database which belongs to the subscriber the speaker claims to be, and a match value between the enhanced voice feature vector and the stored subscriber voice feature vector is determined. The determined match value is compared with a verification threshold value in step 332, and based on this comparison, the verification is determined in step 334.

Figures 3A and 3C illustrate an exemplary speaker identification process in accordance with an exemplary embodiment, wherein Figure 3A again illustrates the voice feature vector enhancement process. Steps 310 to 316 are performed similar as in the foregoing speaker verification example, except for it is not necessary to provide a subscriber identification information together with the speech signal. This is because in speaker identification, it is usually determined whether a provided input speech sample matches with any of all subscribers whose voice characteristics are stored in the subscriber database.

Accordingly, in step 330 the enhanced voice feature vector is compared with any of the stored subscriber voice feature vectors and match values are determined for any of these comparisons. In step 352, the best match value of the foregoing comparisons is determined, and dependent on the determined best match value, identification is determined in step 354. Thus, it is determined that the speaker who provided the speech signal corresponds to that subscriber whose stored voice feature vectors resulted in the best match value. Preferably, this best match value has to satisfy a certain identification threshold value.

An exemplary server suitable for performing one or more of the above described methods comprises a database for storing mean error signals for different compression techniques, a receiver for receiving an coded input signal, an analyzer for identifying the compression technique used for coding the input signal and for determining an input pattern signal, and a compensator for adding the stored mean error signal of the identified compression technique to the determined input pattern signal to obtain an enhanced input pattern signal. The analyzer may be further adapted to decode an input signal if necessary.

For the application as an authentication server, the exemplary server may further comprise a subscriber database for storing the speech characteristics of enrolled subscribers, a comparator for comparing match values with threshold values and a determiner for determining authentication. The exemplary server may further comprise a transmitter for communicating with other entities.

The exemplary server may further comprise a controller for controlling the exemplary server to perform one or more of the above described methods.

Note that instructions for enabling a computing device to perform one or more of the described methods may be provided on a computer-readable medium.

While the invention has been described with respect to the physical embodiments constructed in accordance therewith, it will be apparent to those skilled in the art that various modifications, variations and improvements of the present invention may be made in the light of the above teachings and within the purview of the appended claims without departing from the principles and intended scope of the invention. In addition, those areas in which it is believed that those of ordinary skill in the art are familiar, have not been described herein in order to not unnecessarily obscure the invention described herein. Accordingly, it is to be understood that the invention is not to be limited by the specific illustrative embodiments, but only by the scope of the appended claims.

## Claims

1. A method for enabling robust pattern recognition, the method comprising the steps of:
providing a database with a respective stored mean error signal for each of a plurality of compression techniques; each mean error signal corresponding to a mean error between two predetermined coders;
receiving (202) an input signal coded according to a compression technique;
identifying (204) the compression technique and the coder involved for training
determining (206) an input pattern signal from the received coded input signal; and
adding (208) themean error signal of the identified compression technique, if stored in the database, to the determined input pattern signal to obtain an enhanced input pattern signal.

2. The method according to claim 1, wherein the compression technique is one of a digitizing technique, a digital data compression technique or a combination of a digitizing technique and a digital data compression technique.

3. The method according to claim 2, wherein the determined input pattern signal is determined by extracting characteristic features from the received coded input signal and grouping them in a feature vector or a sequence of feature vectors, if the compression technique is identified as a digitizing technique.

4. The method according to claim 2, wherein the determined input pattern signal is determined by decoding the received input signal according to the identified data compression technique, if the compression technique is identified as a digital data compression technique or a combination of a digitizing technique and a digital data compression technique.

5. The method according to claim 4, wherein determining the input pattern signal further comprises extracting characteristic features from the decoded input signal and grouping them in a feature vector or a sequence of feature vectors.

6. The method according to any of claims 1 to 5, wherein the mean error signal are stored in a format corresponding to the determined input pattern signal.

7. The method according to claims 3 and 5, wherein the stored mean error signals represent mean error feature vectors and the enhanced input pattern signal represents an enhanced input pattern feature vector

8. The method according to any of claims 1 to 7, wherein a reference mean error signal is stored in the database as the mean error signal of a reference compression technique, and relative mean error signals are stored in the database as the mean error signals of further compression techniques, wherein the relative mean error signals are defined relative to the reference mean error signal.

9. The method according to any of claims 1 to 8, further comprising the steps of:
comparing the enhanced input pattern signal to each of a plurality of pattern signals stored in a pattern database, wherein each pattern signal represents a certain pattern, and determining a match value for each pattern signal with regard to the enhanced input signal; and
assigning to the enhanced input pattern signal the certain pattern of the pattern signal with the best match value.

10. The method according to claim 7, wherein the input signal represents a speech signal from a speaker, the digitizing technique represents a speech codec, the input pattern feature vector represents an input voice feature vector, the mean error vector represents a mean voice feature error vector and the enhanced input pattern feature vector represents an enhanced input voice feature vector.

11. The method according to claim 10, further comprising the steps of:
providing a database with a plurality of stored subscriber voice feature vectors, each voice feature vector being characteristic for a certain subscriber:
receiving together with the input speech signal an indication of which subscriber the speaker of the input speech signal claims to be, and a request for verifying the speaker;
comparing (330) the enhanced input voice feature vector with the stored subscriber voice feature vector of the indicated subscriber and determining a match value between them; and
verifying (334) the speaker, when the determined match value satisfies an verification threshold condition.

12. The method according to claim 10, further comprising the steps of:
providing a database with a plurality of stored subscriber voice feature vectors, each voice feature vector being characteristic for a certain subscriber;
receiving together with the input speech signal a request for identifying to which subscriber the speaker of the input speech signal corresponds;
comparing (350) the enhanced input voice feature vector with the stored subscriber voice feature vectors and determining (352) a match value for each stored subscriber feature vector with regard to the enhanced input voice feature vector; and
identifying (354) the speaker as the subscriber to which the stored subscriber voice feature vector with the best match value belongs.

13. A computer-readable medium having computer-executable instructions adapted to enable a computer to perform the method of one of claims 1 to 12.

14. A server for enabling robust pattern recognition, the apparatus comprising:
a database with a plurality of stored mean error signals for each of a plurality of compression techniques, each mean error signal corresponding to a mean error between two predetermined coders;
a receiver for receiving an input signal coded according to.a compression technique;
an analyzer for identifying the compression technique and the coder involved for training and for determining an input patten signal from the received input signal; and
a compensator for adding themean error signal of the identified compression technique, if stored in the database, to the determined input pattern signal to obtain an enhanced input pattern signal.

15. The server according to claim 14, being arranged to perform the method of one of claims 1 to 12.

## Patentansprüche

1. Verfahren zum Ermöglichen stabiler Mustererkennung, wobei das Verfahren die folgenden Schritte umfasst:
Beliefern einer Datenbank mit einem jeweiligen gespeicherten mittleren Fehlersignal für jedes von mehreren Komprimierungsverfahren, wobei jedes mittlere Fehlersignal einem mittleren Fehlersignal zwischen zwei vorbestimmten Codierern entspricht;
Empfangen (202) eines Eingangssignals, das nach einem Komprimierungsverfahren codiert ist;
Identifizieren (204) des Komprimierungsverfahrens und des am Training beteiligten Codierers;
Bestimmen (206) eines Eingangsmustersignals aus dem empfangenen codierten Eingangssignal; und
Hinzuaddieren (208) des gegebenenfalls in der Datenbank gespeicherten mittleren Fehlersignals des identifizierten Komprimierungsverfahrens zum bestimmten Eingangsmustersignal, um ein verbessertes Eingangsmustersignal zu erhalten.

2. Verfahren nach Anspruch 1, wobei es sich bei dem Komprimierungsverfahren um ein Digitalisierungsverfahren, ein Digitaldatenkomprimierungsverfahren oder eine Kombination aus einem Digitalisierungsverfahren und einem Digitaldatenkomprimierungsverfahren handelt.

3. Verfahren nach Anspruch 2, wobei das bestimmte Eingangsmustersignal bestimmt wird, indem charakteristische Merkmale aus dem empfangenen codierten Eingangssignal extrahiert und in einem Merkmalsvektor oder einer Abfolge von Merkmalsvektoren zusammengefasst werden, wenn das Komprimierungsverfahren als Digitalisierungsverfahren identifiziert wird.

4. Verfahren nach Anspruch 2, wobei das bestimmte Eingangsmustersignal bestimmt wird, indem das empfangene Eingangssignal entsprechend dem identifizierten Datenkomprimierungsverfahren decodiert wird, wenn das Komprimierungsverfahren als Digitaldatenkomprimierungsverfahren oder eine Kombination aus einem Digitalisierungsverfahren und einem Digitaldatenkomprimierungsverfahren identifiziert wird.

5. Verfahren nach Anspruch 4, wobei die Bestimmung des Eingangsmustersignals darüber hinaus umfasst, charakteristische Merkmale aus dem decodierten Eingangssignal zu extrahieren und in einem Merkmalsvektor oder einer Abfolge von Merkmalsvektoren zusammenzufassen.

6. Verfahren nach einem der Ansprüche 1 bis 5, wobei die mittleren Fehlersignale in einem Format gespeichert werden, das dem bestimmten Eingangsmustersignal entspricht.

7. Verfahren nach den Ansprüchen 3 und 5, wobei die gespeicherten mittleren Fehlersignale mittlere Fehlermerkmalsvektoren darstellen und das verbesserte Eingangsmustersignal einen verbesserten Eingangsmustermerkmalsvektor darstellt.

8. Verfahren nach einem der Ansprüche 1 bis 7, wobei ein mittlerer Fehler als mittleres Referenzfehlersignal eines Referenzkomprimierungsverfahrens in der Datenbank gespeichert wird und relative mittlere Fehlersignale als mittlere Fehlersignale weiterer Komprimierungsverfahren in der Datenbank gespeichert werden, wobei die relativen mittleren Fehlersignale in Bezug auf das mittlere Referenzfehlersignal definiert werden.

9. Verfahren nach einem der Ansprüche 1 bis 8, darüber hinaus die folgenden Schritte umfassend:
Vergleichen des verbesserten Eingangsmustersignals mit jedem von mehreren in einer Musterdatenbank gespeicherten Mustersignalen, wobei jedes Mustersignal ein bestimmtes Musters darstellt, und Bestimmen eines Übereinstimmungswerts für jedes Mustersignal im Hinblick auf das verbesserte Eingangssignal; und Zuteilen des bestimmten Musters des Mustersignals mit dem besten Übereinstimmungswert zum verbesserten Eingangsmustersignal.

10. Verfahren nach Anspruch 7, wobei das Eingangsmustersignal ein Sprachsignal von einem Sprecher darstellt, das Digitalisierungsverfahren einen Sprach-Codec darstellt, der Eingangsmustermerkmalsvektor einen Eingangssprachmerkmalsvektor darstellt, der mittlere Fehlervektor einen mittleren Sprachmerkmalsfehlervektor darstellt und der verbesserte Eingangsmustermerkmalsvektor einen verbesserten Eingangssprachmerkmalsvektor darstellt.

11. Verfahren nach Anspruch 10, darüber hinaus die folgenden Schritte umfassend:
Beliefern einer Datenbank mit mehreren gespeicherten Teilnehmersprachmerkmalsvektoren, wobei jeder Sprachmerkmalsvektor für einen bestimmten Teilnehmer charakteristisch ist;
Empfangen, und zwar zusammen mit dem Eingangssprachsignal, einer Angabe darüber, welcher Teilnehmer der Sprecher des Eingangssprachsignals zu sein vorgibt, und einer Anforderung zum Verifizieren des Sprechers;
Vergleichen (330) des verbesserten Eingangssprachmerkmalsvektors mit dem gespeicherten Sprachmerkmalsvektor des angegebenen Teilnehmers und Bestimmen eines Übereinstimmungswerts zwischen diesen; und
Verifizieren (334) des Sprechers, wenn der bestimmte Übereinstimmungswert eine Verifizierungsschwellenbedingung erfüllt.

12. Verfahren nach Anspruch 10, darüber hinaus die folgenden Schritte umfassend:
Beliefern einer Datenbank mit mehreren gespeicherten Teilnehmersprachmerkmalsvektoren, wobei jeder Sprachmerkmalsvektor für einen bestimmten Teilnehmer charakteristisch ist;
Empfangen, und zwar zusammen mit dem Eingangssprachsignal, einer Aufforderung zur Identifizierung, welchem Teilnehmer der Sprecher des Eingangssprachsignals entspricht;
Vergleichen (350) des verbesserten Eingangssprachmerkmalsvektors mit den gespeicherten Teilnehmersprachmerkmalsvektoren, und Bestimmen (352) eines Übereinstimmungswerts für jeden gespeicherten Teilnehmermerkmalsvektor im Hinblick auf den verbesserten Eingangssprachmerkmalsvektor; und
Identifizieren (354) des Sprechers als den Teilnehmer, zu dem der gespeicherte Teilnehmersprachmerkmalsvektor mit dem besten Übereinstimmungswert gehört.

13. Rechnerlesbares Medium mit rechnerausführbaren Befehlen, die dazu ausgelegt sind, es einem Rechner zu ermöglichen, das Verfahren nach einem der Ansprüche 1 bis 12 durchzuführen.

14. Server zum Ermöglichen stabiler Mustererkennung, wobei die Vorrichtung aufweist:
eine Datenbank mit mehreren gespeicherten mittleren Fehlersignalen für jedes von mehreren Komprimierungsverfahren, wobei jedes mittlere Fehlersignal einem mittleren Fehlersignal zwischen zwei vorbestimmten Codierern entspricht;
einen Empfänger zum Empfangen eines Eingangssignals, das nach einem Komprimierungsverfahren codiert ist;
einen Analysator zum Identifizieren des Komprimierungsverfahrens und des am Training beteiligten Codierers und zum Bestimmen eines Eingangsmustersignals aus dem empfangenen Eingangssignal; und
einen Kompensator zum Hinzuaddieren des gegebenenfalls in der Datenbank gespeicherten mittleren Fehlersignals des identifizierten Komprimierungsverfahrens zum bestimmten Eingangsmustersignal, um ein verbessertes Eingangsmustersignal zu erhalten.

15. Server nach Anspruch 14, der dazu eingerichtet ist, das Verfahren nach einem der Ansprüche 1 bis 12 durchzuführen.

## Revendications

1. Procédé permettant la reconnaissance robuste de formes, le procédé comportant les étapes de :
fourniture d'une base de données avec un signal d'erreur moyenne respectif stocké pour chacune de plusieurs techniques de compression, chaque signal d'erreur moyenne correspondant à une erreur moyenne entre deux encodeurs prédéterminés ;
réception (202) d'un signal d'entrée codé selon une technique de compression ;
identification (204) de la technique de compression et de l'encodeur impliqué pour l'apprentissage ;
détermination (206) d'un signal de forme d'entrée à partir du signal d'entrée codé reçu ; et
ajout (208), s'il est stocké dans la base de données, du signal d'erreur moyenne de la technique de compression identifiée au signal de forme d'entrée déterminé, afin d'obtenir un signal de forme d'entrée amélioré.

2. Procédé selon la revendication 1, où la technique de compression est soit une technique de numérisation, soit une technique de compression de données numériques, soit une combinaison de technique de numérisation et de technique de compression de données numériques.

3. Procédé selon la revendication 2, où le signal de forme d'entrée déterminé est déterminé par extraction de traits caractéristiques à partir du signal d'entrée codé reçu et leur regroupement dans un vecteur de traits ou une séquence de vecteurs de traits, si la technique de compression est identifiée comme une technique de numérisation.

4. Procédé selon la revendication 2, où le signal de forme d'entrée déterminé est déterminé par décodage du signal d'entrée reçu selon la technique de compression de données identifiée, si la technique de compression est identifiée comme une technique de compression de données numériques ou une combinaison de technique de numérisation et de technique de compression de données numériques.

5. Procédé selon la revendication 4, où la détermination du signal de forme d'entrée comporte en outre l'extraction de traits caractéristiques à partir du signal d'entrée décodé et leur regroupement dans un vecteur de traits ou une séquence de vecteurs de traits.

6. Procédé selon l'une des revendications 1 à 5, où les signaux d'erreur moyenne sont stockés dans un format correspondant au signal de forme d'entrée déterminé.

7. Procédé selon les revendications 3 et 5, où les signaux d'erreur moyenne stockés représentent des vecteurs de traits d'erreur moyenne et le signal de forme d'entrée amélioré représente un vecteur de traits de forme d'entrée amélioré.

8. Procédé selon l'une des revendications 1 à 7, où un signal d'erreur moyenne de référence est stocké dans la base de données comme le signal d'erreur moyenne d'une technique de compression de référence, et des signaux d'erreur moyenne relatifs sont stockés dans la base de données comme les signaux d'erreur moyenne d'autres techniques de compression, les signaux d'erreur moyenne relatifs étant définis relativement au signal d'erreur moyenne de référence.

9. Procédé selon l'une des revendications 1 à 8, comportant en outre les étapes de :
comparaison du signal de forme d'entrée amélioré avec chacun de plusieurs signaux de forme stockés dans une base de données de formes, chaque signal de forme représentant une certaine forme, et détermination d'une valeur de concordance pour chaque signal de forme par rapport au signal d'entrée amélioré ; et assignation au signal de forme d'entrée amélioré du certain type de signal de forme ayant la meilleure valeur de concordance.

10. Procédé selon la revendication 7, où le signal de forme d'entrée représente un signal vocal provenant d'un locuteur, la technique de numérisation représente un codec vocal, le vecteur de traits de forme d'entrée représente un vecteur de traits vocaux d'entrée, le vecteur d'erreurs moyennes représente un vecteur d'erreurs de traits vocaux moyennes et le vecteur de traits de forme d'entrée amélioré représente un vecteur de traits vocaux d'entrée amélioré.

11. Procédé selon la revendication 10, comportant en outre les étapes de :
fourniture d'une base de données avec une pluralité de vecteurs de traits vocaux d'abonné stockés, chaque vecteur de traits vocaux étant caractéristique d'un certain abonné ;
réception, en même temps que le signal vocal d'entrée, d'une indication indiquant quel abonné le locuteur du signal vocal d'entrée prétend être, et une demande de vérification du locuteur ;
comparaison (330) du vecteur de traits vocaux d'entrée amélioré avec le vecteur de traits vocaux d'abonné stocké de l'abonné indiqué et
détermination d'une valeur de concordance entre eux ; et
vérification (334) du locuteur si la valeur de concordance déterminée remplit une condition seuil de vérification.

12. Procédé selon la revendication 10, comportant en outre les étapes de :
fourniture d'une base de données avec une pluralité de vecteurs de traits vocaux d'abonné stockés, chaque vecteur de traits vocaux étant caractéristique d'un certain abonné ;
réception, en même temps que le signal vocal d'entrée, d'une demande permettant d'identifier à quel abonné le locuteur du signal vocal d'entrée correspond ;
comparaison (350) du vecteur de traits vocaux d'entrée amélioré avec les vecteurs de traits vocaux d'abonné stockés et détermination (352) d'une valeur de concordance pour chaque vecteur de traits d'abonné stocké par rapport au vecteur de traits vocaux d'entrée amélioré ; et
identification (354) du locuteur comme l'abonné auquel le vecteur de traits vocaux d'abonné stocké ayant la meilleure valeur de concordance est associé.

13. Un support lisible par ordinateur comportant des instructions exécutables par ordinateur, apte à permettre à un ordinateur d'exécuter le procédé de l'une des revendications 1 à 12.

14. Un serveur permettant la reconnaissance robuste de formes, le dispositif comportant :
une base de données comportant une pluralité de signaux d'erreur moyenne stockés pour chacune de plusieurs techniques de compression, chaque signal d'erreur moyenne correspondant à une erreur moyenne entre deux encodeurs prédéterminés ;
un récepteur servant à recevoir un signal d'entrée codé selon une technique de compression ;
un analyseur servant à identifier la technique de compression et l'encodeur impliqué pour l'apprentissage et à déterminer un signal de forme d'entrée à partir du signal d'entrée reçu ; et
un compensateur servant à ajouter, s'il est stocké dans la base de données, le signal d'erreur moyenne de la technique de compression identifiée au signal de forme d'entrée déterminé, afin d'obtenir un signal de forme d'entrée amélioré.

15. Serveur selon la revendication 14, étant configuré pour exécuter le procédé de l'une des revendications 1 à 12.
